# EUROPEAN PATENT APPLICATION

(11) **EP 4 491 011 A1**
(43) Date of publication of application: **15.01.2025**
(21) Application number: 24188437.8
(22) Date of filing: 12.07.2024
(51) Int. Cl.: A01G 9/02, A01G 27/00

(54) **AN APPARATUS, KIT, AND SYSTEM FOR HORTICULTURE**

(30) Priority: 13.07.2023 SG 10202302001Y
(71) Applicant: Blueacres Pte. Ltd., 417841 Singapore (SG); Kee, Boon Hian, Singapore 789600 (SG); Ng, Boon Ching, Singapore 659443 (SG)
(72) Inventor: Kee, Boon Hian, 789600 SINGAPORE (SG); Ng, Boon Ching, 659443 SINGAPORE (SG); Liew, Jay Sin Jie, 659443 SINGAPORE (SG)
(74) Representative: Lavoix

(57) **Abstract**

The invention provides an apparatus, kit, and system for horticulture. The apparatus comprises an elongate body that retains a plant therewithin, a flanged portion at a proximal end of the apparatus, and one or more fluid-handling portions. The body is inclined relative to a plane having the flanged portion with a distal end of the apparatus extending in a downwardly inclined altitude with respect to the flanged portion, with the flanged portion supporting the installation of the apparatus into an aperture of a vertical structure having levelled surfaces for fluid received by the apparatus to be handled by one or a combination of the fluid-handling portions. The apparatus may be in the form of one or more assemblable pieces that are assembled into the apparatus. The apparatus is further part of a system with a vertical structure where a plurality of these apparatuses are installed thereon, and fluid dispensing means that dispenses fluid to the apparatuses.

## Description

The invention relates to an apparatus, kit, and a related system for performing horticulture. More specifically, an apparatus, kit, and system applicable to the cultivation of plants in a vertical farming setting.

### BACKGROUND OF THE INVENTION

Horticulture involves the cultivation of plants, and it encompasses a wide range of techniques for plant breeding and plant production. It pertains to the optimisation of plant growth and development to produce high-quality crops for future generations. Among such techniques includes hydroponics, which is a soil-less plant cultivation technique, whereby plants are grown in nutrient-rich fluid for optimising their growth and development. Infrastructure involving hydroponics includes vertical farming, where plants are grown in vertical structures and are provided with nutrient-rich fluid.

There are a few disclosed technologies over the prior art that relate to horticulture, especially within a vertical farming setting. Among them include US20180168108A1, which discloses a growth system with growth pods. The growth system utilises gravity-fed irrigation and collection, with integrated illumination suitable for plant growth, and the growth pods installable in the system contain seeds or young plants and a growth medium. In some embodiments, the pods may be separate entities preloaded with dormant seeds and growth medium from a provider, and when installed in the system at an angle from vertical, germinate and grow when the system exposes the installed pods to predetermined irrigation and illumination cycles for the particular plant varieties in the pods.

Yet another disclosed technology is US10772270B2, which discloses an aeroponic column comprising a base and a planter section attached to the base. The planter section defines a hollow interior, a channel and plant holder openings adapted to receive a plant holder. Furthermore, there is a nutrient distributor attached to the planter section with fluid openings adapted to allow fluid to flow down the planter sections. Moreover, there is a conduit assembly operatively connected between the base and the nutrient distributor, and adapted to carry fluid from the base to the nutrient distributor. The conduit assembly comprises a conduit formed separately from the planter section. The said conduit extends through the channel of the planter section, and it has a male-threaded first end and a female-threaded second end.

However, the aforementioned prior arts may not be optimal technologies as they may be afflicted by one or more issues that may impede their effectiveness and scalability in plant cultivation. For example, since their plant-retaining bodies are not fully within the vertical structure for receiving fluid, there may be an inefficient receipt and distribution of fluids, whereby fluids leak out from the front of the vertical structure, or there may be dry spots about the plant-retaining bodies. Moreover, their plant-retaining bodies may require a specialised vertical structure that conforms to them, thus there is a substantial increase in the cost of fabrication.

Accordingly, it would be desirable for an apparatus, kit, and system for horticulture that is capable of addressing the shortcomings of the prior art. Preferably, the apparatus, kit, and system are efficient in receiving and distributing fluids for the nourishment of the plants. Moreover, the apparatus, kit, and system have scalability and are low in cost as a less-specialised vertical structure is required for their installation, i.e. the apparatus and kit conform to the vertical structure instead of vice versa.

### SUMMARY OF INVENTION

The main objective of the present invention is to provide an apparatus for horticulture that cultivates plants, preferably in a vertical farming setting. The apparatus of the present has a hollow body that retains a plant therein. The apparatus is further formed with (i) a flanged portion that shall allow it to be installed at an aperture of a vertical structure that is in the form of a partition with levelled surfaces, and (ii) one or more fluid-handling portions that receive and distribute fluid accordingly. The apparatus may also be in an embodiment whereby it is in the form of a kit of parts, in which there are one or more assemblable pieces that may define a fixture-adaptor pair, with the adaptor being installed at the aperture of the vertical structure, and the fixture, having a body that retains a plant therein, being inserted thereinto the adaptor. A system for horticulture involving the apparatus in its various embodiments is further provided.

The advantages of the present invention are as follows. First, the present invention is compatible with simple vertical structures that have levelled or flat surfaces. Second, the present invention provides ease in transplanting plants as a horticulturist or a plant cultivator can easily drop new seedlings quickly, thereby decreasing lead time in the planting process. Third, the present invention provides easy removal of plants for their harvest, thereby decreasing lead time in the harvesting process. Fourth, the present invention provides a robust distribution of fluids that has high efficiency and accuracy. Fifth, the present invention only requires a growing medium (substrate), and it does not require a substrate support or growing support for retaining fluid, thereby reducing the time required for its cleaning. Sixth, the present invention in its various embodiments offers a degree of customisability and interchangeability, thereby making it suitable for a large variety of system design choices.

The present invention intends to provide an apparatus for horticulture, comprising an elongated body that retains a plant therewithin, a flanged portion at a proximal end of the apparatus, and one or more fluid-handling portions. The body is inclined relative to a plane having the flanged portion with a distal end of the apparatus extending in a downwardly inclined altitude with respect to the flanged portion, with the flanged portion supporting the installation of the apparatus into an aperture of a vertical structure having levelled surfaces for fluid received by the apparatus to be handled by one or a combination of the fluid-handling portions.

Preferably, regarding the apparatus, the fluid-handling portions include a first fluid-channelling portion in which the flanged portion extends therefrom, and a second fluid-channelling portion that is formed on the first fluid-channelling portion. The first fluid-channelling portion directs received fluid away from the apparatus, and the second fluid-channelling portion directs fluid towards the body.

Preferably, regarding the apparatus, the fluid-handling portions further include a fluid-collecting portion formed on the body, and at least one fluid-draining portion formed on the body and may be opposed to the fluid-collecting portion. The fluid-collecting portion allows receipt of fluid from the environment and/or itself into the body, and the fluid-draining portion drains excess fluid within the body away from the apparatus.

Preferably, regarding the apparatus, the fluid-draining portion is at a substantial distance away from the distal end of the apparatus for retaining a portion of received fluid within the body for immersing roots of the plant therein.

Preferably, regarding the apparatus, the fluid-draining portion is formed with an outline that is substantially tapered towards the distal end of the apparatus for guiding root growth of a plant to be external of the body for its aeration.

Preferably, the apparatus further comprises a fastening mechanism formed along a lateral surface of the first fluid-channelling portion as a set of protrusions for providing a support at the proximal end of the apparatus as the apparatus is installed on the vertical structure.

Preferably, the apparatus further comprises an orientation marker formed on the flanged portion for serving as an indication of a proper orientation of the apparatus whereby it is at a topmost level along the flanged portion.

Optionally, regarding the apparatus, the first fluid-channelling portion and the second fluid-channelling portion are part of a first piece, and the fluid-collecting portion and the fluid-draining portion are part of a second piece. The first piece and the second piece are capable of being assembled to form the apparatus. Preferably, the first piece and the second piece each include a connector that is mateable with each other for the first piece and the second piece to be detachably connected for their assembly.

Preferably, regarding the apparatus, the body is inclined relative to a plane having the flanged portion with a distal end of the apparatus extending in a downwardly inclined altitude with respect to the flanged portion at an angle that is substantially between 50° and 80°.

The present invention also intends to provide a system for horticulture, comprising a vertical structure having levelled surfaces, formed with a plurality of apertures, a fluid dispensing means for dispensing fluid, and a plurality of apparatuses for horticulture that each includes an elongated body that retains a plant therewithin, a flanged portion at a proximal end of the apparatus, and one or more fluid-handling portions. The body of each apparatus is inclined relative to a plane having the flanged portion with a distal end of the apparatus extending in a downwardly inclined altitude with respect to the flanged portion, with the flanged portion supporting the installation of the apparatus into one aperture of the vertical structure for fluid dispensed by the fluid-dispensing means to be received by the apparatus for it handled by one or a combination of the fluid-handling portions.

Preferably, regarding the system, the fluid-handling portions of the apparatus include a first fluid-channelling portion in which the flanged portion extends therefrom, and a second fluid-channelling portion that is formed on the first fluid-channelling portion. The first fluid-channelling portion directs received fluid away from the apparatus, and the second fluid-channelling portion directs fluid towards the body.

Preferably, regarding the system, the fluid-handling portions of the apparatus further include a fluid-collecting portion formed on the body, and at least one fluid-draining portion formed on the body and may be opposed to the fluid-collecting portion. The fluid-collecting portion allows receipt of fluid from the environment and/or itself into the body, and the fluid-draining portion drains excess fluid within the body away from the apparatus.

Preferably, regarding the system, the fluid-draining portion of the apparatus is at a substantial distance away from the distal end of the apparatus for retaining a portion of received fluid within the body for immersing roots of the plant therein.

Preferably, regarding the system, the fluid-draining portion of the apparatus is formed with an outline that is substantially tapered towards the distal end of the apparatus for guiding root growth of a plant to be external of the body for its aeration.

Preferably, regarding the system, the apparatus further comprises a fastening mechanism formed along a lateral surface of the first fluid-channelling portion as a set of protrusions for providing a support at the proximal end of the apparatus as the apparatus is installed on the vertical structure.

Preferably, regarding the system, the apparatus further comprises an orientation marker formed on the flanged portion for serving as an indication of a proper orientation of the apparatus whereby it is at a topmost level along the flanged portion.

Optionally, regarding the system, the apparatus is in the form of assemblable pieces where the first fluid-channelling portion and the second fluid-channelling portion are part of a first piece, and the fluid-collecting portion and the fluid-draining portion are part of a second piece. The first piece and the second piece are capable of being assembled to form the apparatus. Preferably, the first piece and the second piece of the apparatus each include a connector that is mateable with each other for the first piece and the second piece to be detachably connected for their assembly.

The present invention further intends to provide a kit of parts assembly for horticulture, comprising a first piece and a second piece, with an elongate body that retains a plant therewithin being part of the second piece, a flanged portion being part of either one or both the first piece and the second piece, and one or more fluid-handling portions being part of either one or both the first piece and the second piece. The first piece and the second piece are detachably connectable with each other, and assembly of the pieces allows the body to be inclined relative to a plane having the flanged portion with a distal end of the assembled piece extending in a downwardly inclined altitude with respect to the flanged portion, with the flanged portion supporting the installation of the assembled piece into an aperture of a vertical structure having levelled surfaces for fluid received by the assembled piece to be handled by one or a combination of the fluid-handling portions.

One skilled in the art will readily appreciate that the invention is well adapted to carry out the objects and obtain the ends and advantages mentioned, as well as those inherent therein. The embodiments described herein are not intended as limitations on the scope of the invention.

### BRIEF DESCRIPTION OF THE DRAWINGS

To facilitate an understanding of the present invention, there is illustrated in the accompanying drawings the preferred embodiments, from an inspection of which when considered in connection with the following description, the invention, its construction and operation and many of its advantages would be readily understood and appreciated.

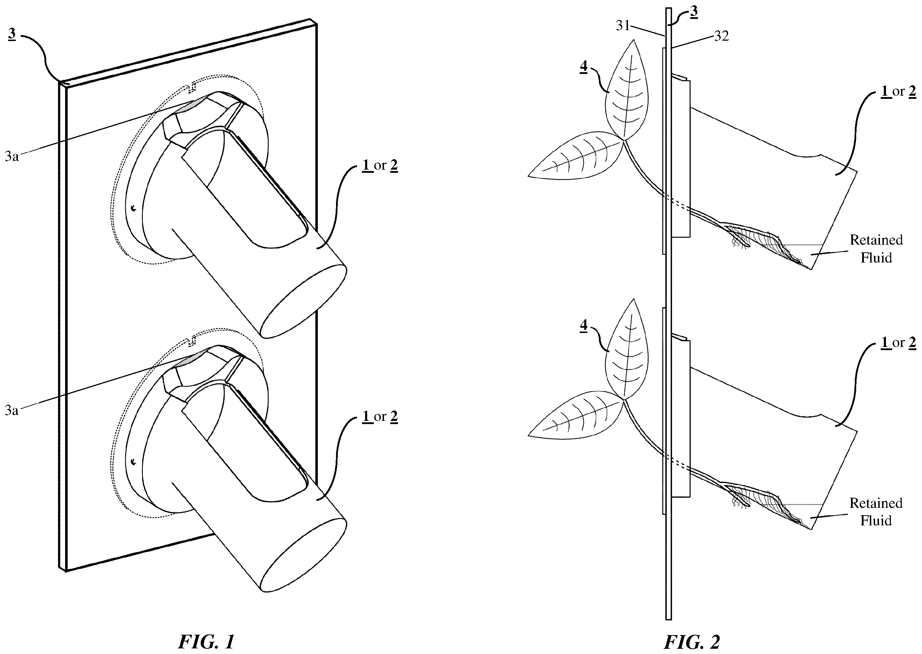

**FIG. 1** is a diagram illustrating a perspective view of the present invention, whereby the apparatuses are installed onto a vertical structure, being a partition, via apertures of the partition.
**FIG. 2** is a diagram illustrating a sectional side view of the present invention, whereby the apparatuses are installed onto a partition via apertures of the partition, with plants growing therein the apparatuses.

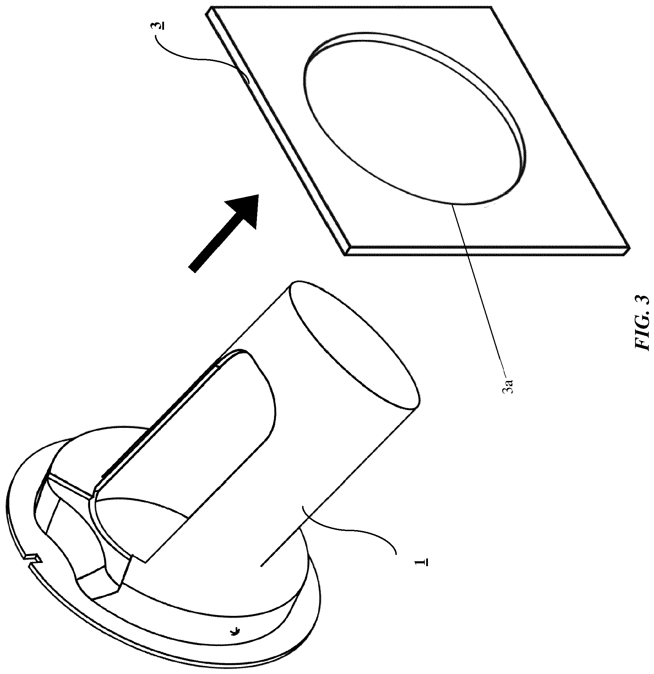

**FIG 3** is a diagram illustrating an example installation of the apparatus of the present invention in its first embodiment onto the partition via an aperture of the partition.

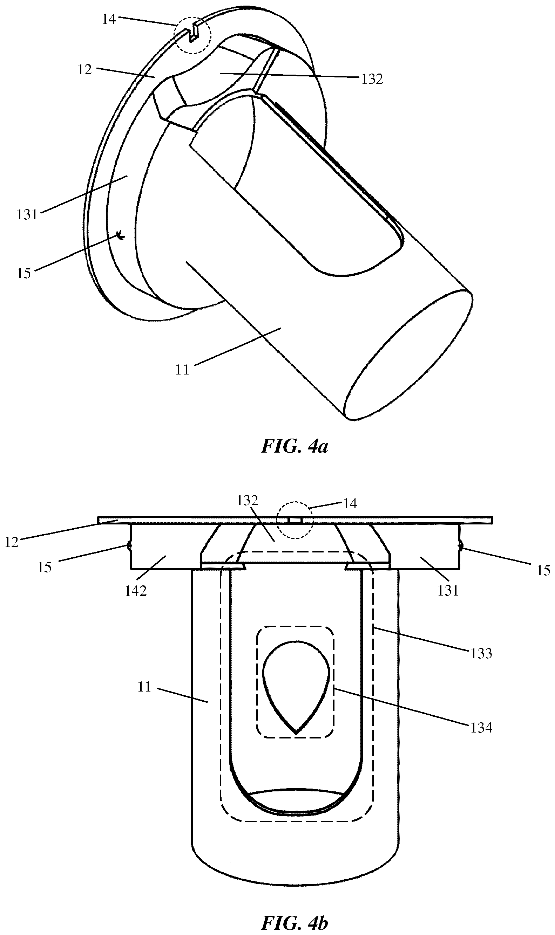

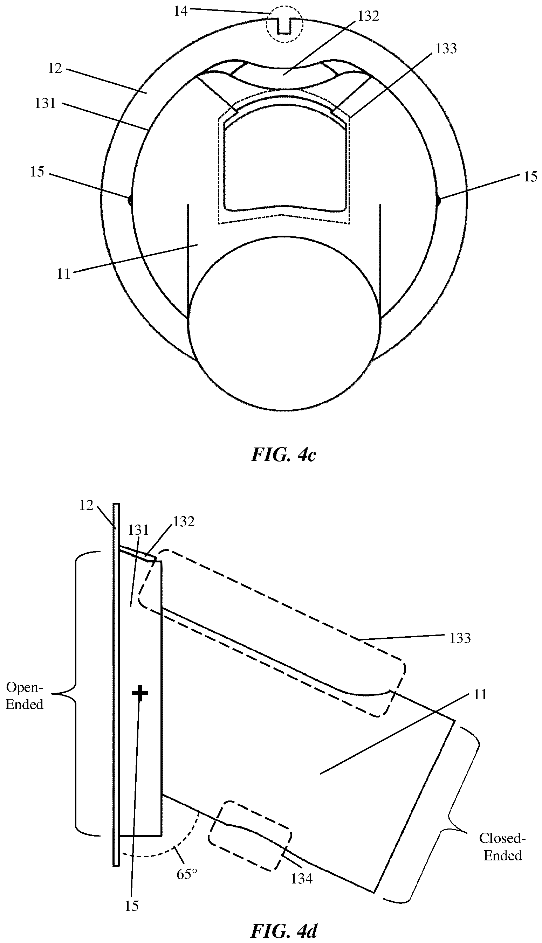

**FIGS 4a** to **4d** are diagrams illustrating the apparatus's first embodiment. In particular, **FIG. 4a** illustrates a perspective view of the said embodiment, **FIG. 4b** illustrates a top view of the said embodiment, **FIG. 4c** illustrates a rear view of the said embodiment, and **FIG. 4d** illustrates a side view of the said embodiment.

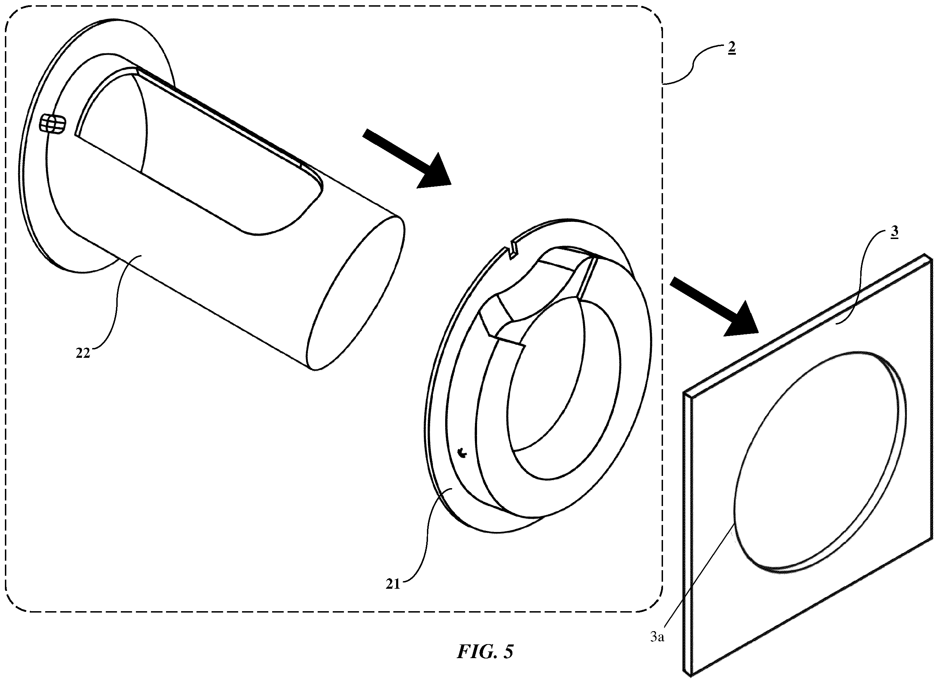

**FIG 5** is a diagram illustrating an example installation of the apparatus of the present invention in its second embodiment, whereby it is in the form of assemblable pieces, onto the partition via an aperture of the partition.

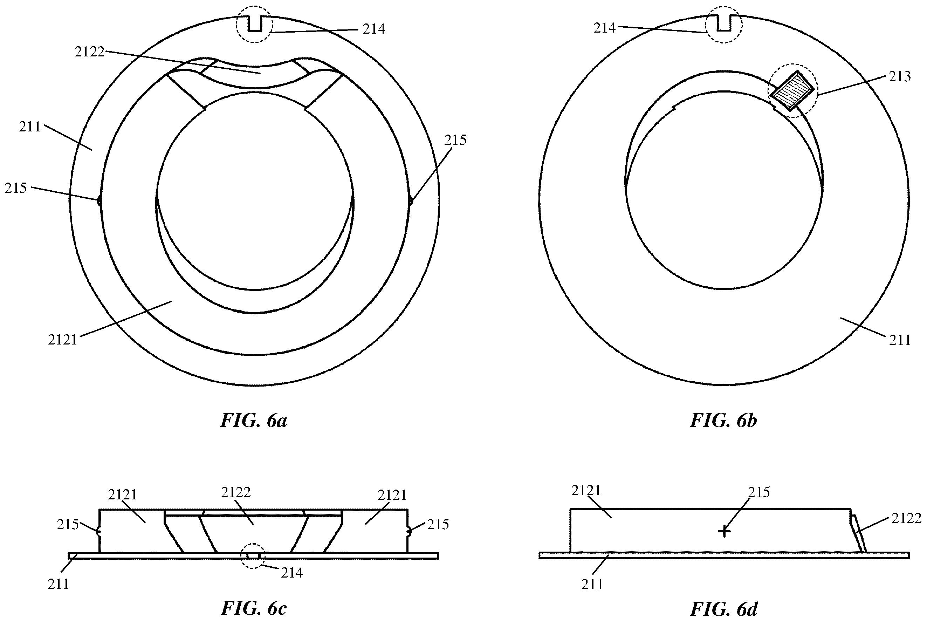

**FIGS 6a** to **6d** are diagrams illustrating a first piece of the apparatus's second embodiment. In particular, **FIG. 6a** illustrates a rear view of the said piece, **FIG. 6b** illustrates a front view of the said piece, **FIG. 6c** illustrates a top view of the said piece, and **FIG. 6d** illustrates a side view of the said piece.

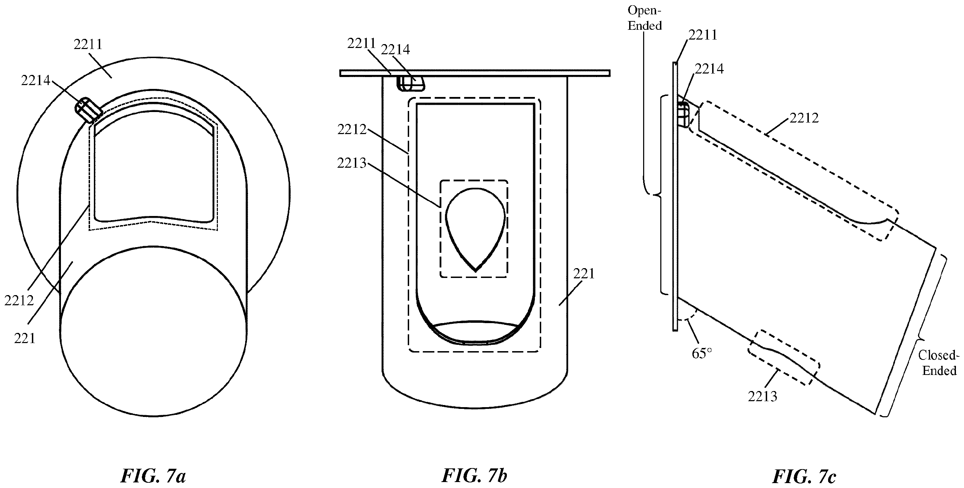

**FIGS 7a** to **7c** are diagrams illustrating a second piece of the apparatus's second embodiment. In particular, **FIG. 7a** illustrates a rear view of the said piece, **FIG. 7b** illustrates a top view of the said piece, and **FIG. 7c** illustrates a side view of the said piece.

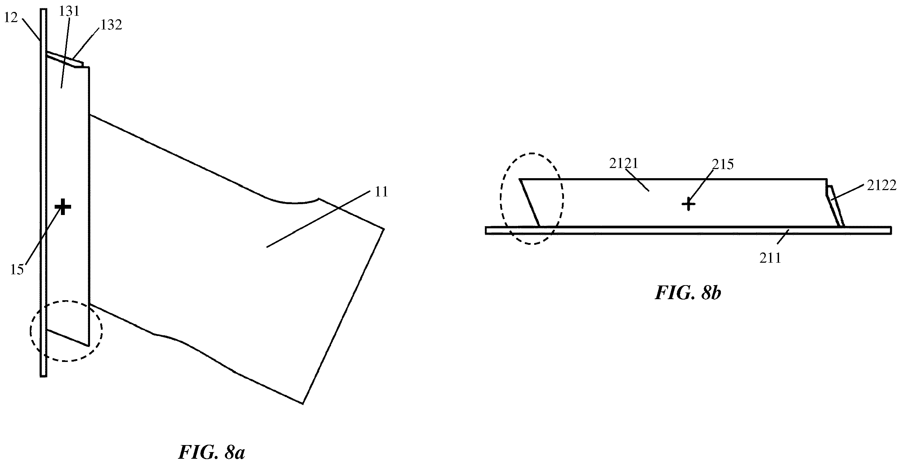

**FIGS 8a** and **8b** are diagrams illustrating alternative configurations of the first fluid-channelling portion for both embodiments of the apparatus. In particular, **FIG. 8a** illustrates the first fluid-channelling portion of the apparatus's first embodiment in an alternative configuration, and **FIG. 8b** illustrates the first fluid-channelling portion of the first piece of the apparatus's second embodiment in an alternative configuration.

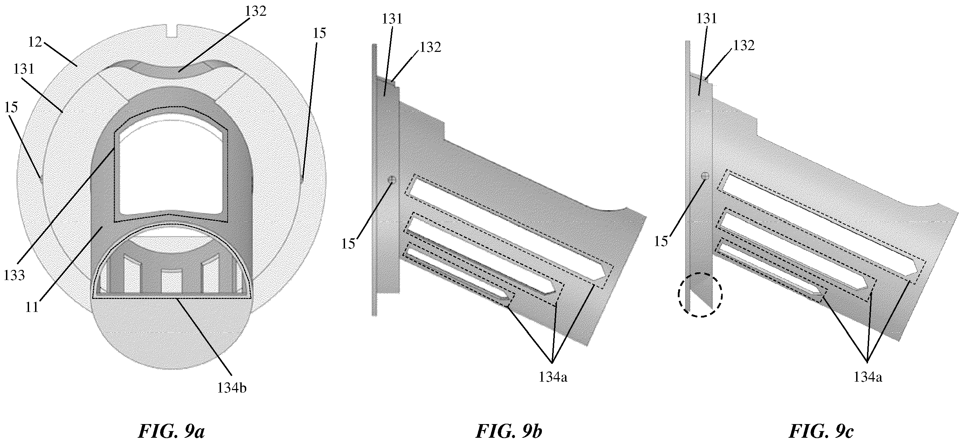

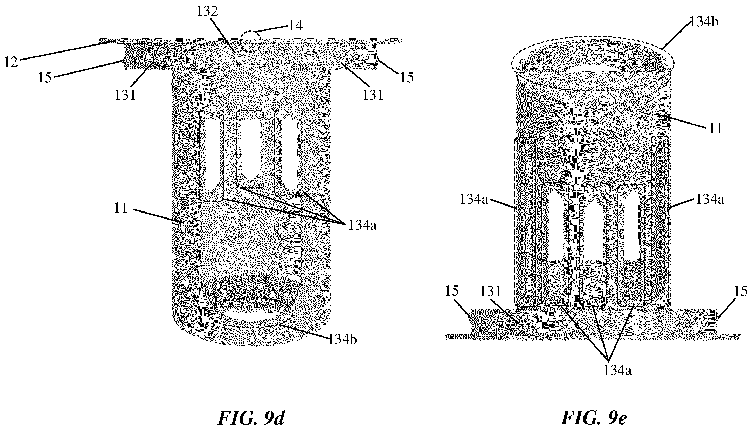

**FIGS 9a** to **9e** are diagrams illustrating an alternative configuration for the fluid-draining portion of the apparatus of the present invention in its first embodiment. In particular, **FIG. 9a** illustrates a rear view of the said embodiment, **FIG. 9b** illustrates a side view of the said embodiment, **FIG. 9d** illustrates a top view of the said embodiment, and **FIG. 9e** illustrates a bottom view of the said embodiment. In particular, **FIG. 9c** illustrates the present invention in its first embodiment that has an alternative configuration of the first fluid-channelling portion.

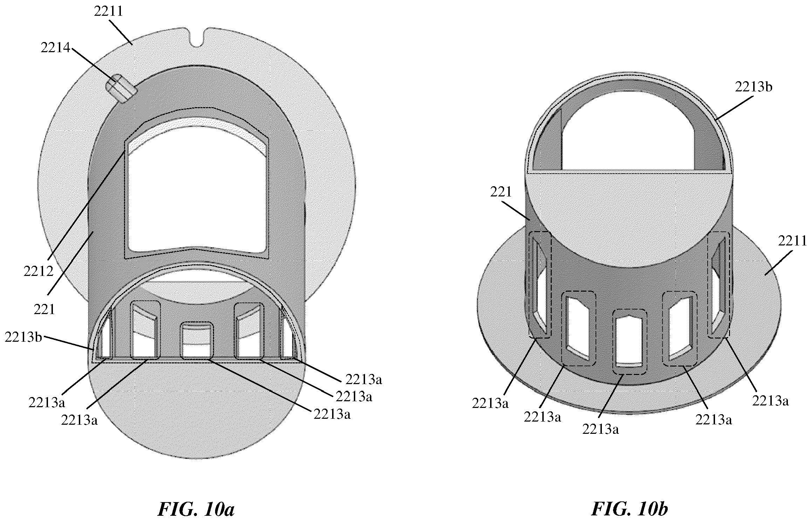

**FIGS 10a** and **10b** are diagrams illustrating an alternative configuration for the fluid-draining portion for the apparatus of the present invention for the second piece of the second embodiment. In particular, **FIG. 10a** illustrates a rear view of the said piece of the embodiment, and **FIG. 10b** illustrates a bottom view of the said piece of the embodiment.

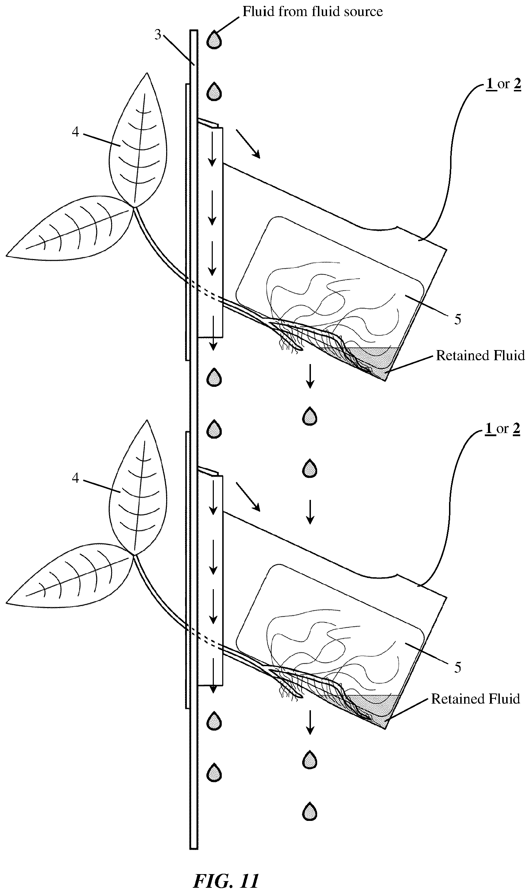

**FIG 11** is a diagram illustrating a sectional side view of the present invention, whereby the apparatuses are installed onto a partition via apertures of the partition, with plants growing therein the apparatus, further illustrating an example fluid distribution between the apparatuses.

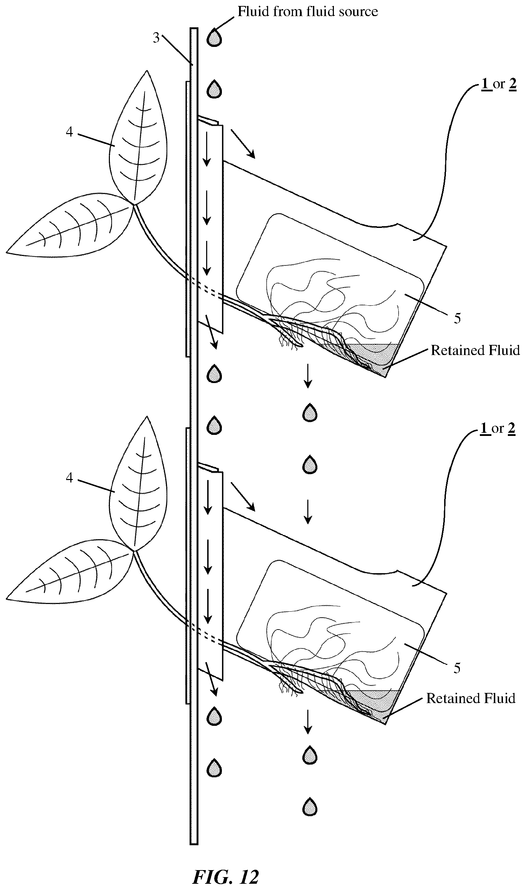

**FIG 12** is a diagram illustrating a sectional side view of the present invention, whereby the apparatuses have first fluid-channelling portions of alternative configuration installed onto a partition via apertures of the partition, with plants growing therein the apparatus, further illustrating an example fluid distribution between the apparatuses.

### DETAILED DESCRIPTION OF THE INVENTION

The present invention relates to an apparatus suitable for horticulture. The apparatus may also be realised as a kit of assemblable parts or pieces. A plurality of these apparatuses may be further implemented within a system that cultivates plants, preferably within a vertical farming setting.

According to the concept of the invention, the apparatus is a pod-like structure that is to be mounted onto a partition for the cultivation of a plant therewithin. The apparatus is structurally formed for it to be supportively mounted on the partition during installation of the apparatus. The apparatus is also structurally formed for retaining, irrigating, aerating, and nourishing the plant cultivated therewithin. Furthermore, embodiments of the apparatus may include it being in the form of assemblable parts that provide a degree of flexibility in its usage and deployment.

The invention will now be described in greater detail, by way of example, with reference to the figures. For ease of reference, common reference numerals or series of numerals will be used throughout the figures when referring to the same or similar features common to the figures.

**FIG. 1** illustrates a perspective view of the present invention, whereby the apparatuses **1, 2** are installed onto a vertical structure, being a partition **3,** via apertures **3a** of the partition **3.** Whereas, **FIG. 2** illustrates a sectional side view of the present invention, whereby the apparatuses **1, 2** are installed onto a partition **3** via apertures **3a** of the partition **3,** with plants **4** retained and grown within each apparatus **1, 2.** Preferably, there is included a growing medium therewithin the apparatus **1, 2,** but is omitted in **FIG. 2** for clarity of the present invention.

As shown in **FIGS 1** and **2****,** one or more apparatuses **1, 2** are to be installed on a partition **3.** In particular, the apparatuses may be of a first embodiment **1** or a second embodiment **2.** Both embodiments may be substantially similar, with their difference being their ability to be assembled. More specifically, the apparatus of the first embodiment **1** may be of a single piece that is installed onto the partition **3,** whereas the apparatus of the second embodiment **2** may be of multiple pieces capable of being assembled into said apparatus as it is installed onto the partition **3.**

The partition **3,** being a vertical structure, is preferably a rigid and upright panel with a plurality of apertures **3a** that allows for installation of the apparatuses **1, 2** thereon. It may also be part of a pillar. Moreover, partition **3** may be defined to have a first surface **31** and a second surface **32.** The first surface **31** is preferably an outward-facing surface that receives light for photosynthesis and phototropism of the plant **4** cultivated within the apparatuses **1, 2.** Whereas, the second surface is preferably an inward-facing surface that receives fluids, such as water or nutrient solutions, for the growth and nourishment of the plant. Both of these surfaces **31, 32** are levelled with a substantial flatness and with little to no curvature.

Regarding the apertures **3a** of the partition **3,** they are preferably holes bored by the use of a hole saw or a drill bit. The size of the apertures **3a,** in terms of its diameter, may range from 3 cm to 7 cm, but it is most preferably 5 cm. The size of the apertures **3a** may also be large and have a diameter of around 15 cm to 20 cm, for larger-sized apparatuses **1, 2** or flowering pots to be accommodated therein. The apertures **3a** on the partition **3** are to be adjacent and equidistant to one another. Hence, there may be a column, a matrix, or an array of apertures **3a** formed on the partition **3,** with each aperture **3a** positioned and arranged to be directly beside, above or below each other. Moreover, the apertures **3a** on the partition **3** are to be of the same size. However, it is to be noted that the descriptions of the apertures **3a** on the partition **3** may not be limited to as described, and they may have varying sizes, or be formed in any other permissible manner on the partition **3.**

Regarding the structural properties of partition **3,** it is preferably able to withstand humid environments, as such it may be, to a certain degree, moisture-resistant and heat-resistant. Preferably as well, partition **3** may have a substantial tensile strength, for it to sufficiently support stress forces exerted by the plurality of apparatuses **1, 2** installed thereon, without bending or breaking.

With this, the partition **3,** may be, by way of example, to be made of acrylonitrile butadiene styrene (ABS) plastic, polyvinyl chloride (PVC) plastic, polycarbonate plastic, or the like.

In the context of the present invention, it is to be noted that plants **4** may refer to any kind of plant life that may be cultured, preferably compatible with hydroponics and/or aeroponics. The plants may be, by way of example, varieties such as leaf vegetables, herbs, tomatoes, or the like.

**FIGS 3** to **4d** illustrate the apparatus of the present invention in its first embodiment **1.** More specifically, **FIG. 3** illustrates an example installation of the apparatus of the present invention in its first embodiment **1** onto the partition **3** via an aperture **3a** of the partition **3.** **FIGS 4a** to **4d** illustrate one or more views of the apparatus in its first embodiment **1,** with **FIG 4a** illustrating its perspective view, **FIG. 4b** illustrating its top view, **FIG. 4c** illustrating its rear view, and **FIG. 4d** illustrating its side view. From hereon, the apparatus in its first embodiment **1** is likewise referred to as "first embodiment".

As shown in **FIGS 3** to **4d****,** the first embodiment **1** has a body **11** that is barrel-like, and is further elongate in such a way that its proximal end and its distal end are inclined with respect to each other. More specifically, the distal end is at a downwardly inclined altitude with respect to the proximal end at an angle. This angle may be between 50° and 80°, but is most preferably 65°. Preferably, the proximal end is open-ended for shoots of a plant **4** to emerge therefrom during its growth, while the distal end is closed-ended for retaining the plant **4** therewithin. About the body **11** there is disposed one or more features that contribute to its installation on the partition **3** and its handling of the plant **4** retained therein. In particular, there is included a flanged portion **12,** fluid-handling portions such as a first fluid-channelling portion **131,** a second fluid-channelling portion **132,** a fluid-collecting portion **133,** and a fluid-draining portion **134,** an orientation marker **14,** and a fastening mechanism **15.** It is to be noted that the proximal end of the first embodiment **1** may include the flanged portion **12,** the first fluid-channelling portion **131,** and the second fluid-channelling portion **132.**

Regarding the first embodiment **1,** its first fluid-channelling portion **131** is a substantively annular structure that extends perpendicularly and outwardly from the circumference of its body **11,** having an outer diameter that is much larger than its body **11** but an inner diameter that is substantially the same as its body **11.** Along the lateral surface of the first fluid-channelling portion **131** lies the second fluid-channelling portion **132,** which is a concave segment that tapers towards the fluid-collecting portion **133.** The flanged portion **12** is yet another annular structure that extends perpendicularly and outwardly from the circumference of the first fluid-channelling portion **131,** having an outer diameter that is much larger than the first fluid-channelling portion **131** but having an inner diameter that is substantially the same as the first fluid-channelling portion **131** and a lateral surface that is thinner compared to the first fluid-channelling portion **131.**

Regarding the first embodiment **1,** the flanged portion **12** supports the mounting of the first embodiment **1** onto the partition **3** during installation of the first embodiment **1.** More specifically, the flanged portion **12** is to rest against the first surface **31** of the partition **3** as the first embodiment **1** is inserted into the aperture **3a,** while the rest of the first embodiment **1** exits and protrudes outwardly from the second surface **32** of the partition **3.**

Regarding the first embodiment **1,** its body **11** is formed with the fluid-collecting portion **133** and the fluid-draining portion **134.** In particular, the fluid-collecting portion **133** and the fluid-draining portion **134** are positioned to be in opposition with each other along the body **11.** The relative size of the fluid-collecting portion **133** is preferably larger than the fluid-draining portion **134.** Moreover, the fluid-collecting portion **133** may be a cutout that extends from an area along the body **11** that is adjacent to the second fluid-channelling portion **132** to the distal end of the body **11,** which is also the distal end of the first embodiment **1.** The fluid-draining portion **134** may be a cutout that is at a substantial distance away from the distal end of the body **11.** For the fluid-collecting portion **133,** its outline is substantially rectangular-shaped with rounded edges at the distal end of the body **11.** For the fluid-draining portion **134,** its outline is substantially tapered with it having a diminishing opening towards the distal end of the body **11,** more specifically, it is teardrop-shaped with a rounded edge in the direction of the proximal end and a pointed edge in the direction of the distal end.

Regarding the first embodiment **1,** along the flanged portion **12** there is disposed the orientation marker **14** that serves as an indication of the orientation and positioning of the first embodiment **1** as it is installed onto the partition **3.** Furthermore, the orientation marker **14** is preferably adjacent to the second fluid-channelling portion **132.** The orientation marker **14** is to indicate that the first embodiment **1** is inserted into the aperture **3** at a correct orientation, wherein its second fluid-channelling portion **132** is facing an upward direction, with its proximal end pointed towards an upward direction while the distal end pointed towards a downwards direction. During installation of the first embodiment **1** on the partition **3,** it is most preferable that the orientation marker **14** is substantively made to be at a topmost level along the flanged portion **12** as the flanged portion **12** rests on the partition **3.**

Regarding the first embodiment **1,** along the first fluid-channelling portion **131** there is disposed the fastening mechanism **15,** which is preferably in the form of a set of protrusions that are about the lateral surface of the first fluid-channelling portion **131.** In particular, there are at least two protrusions that are substantially collinear with respect to each other. As the first embodiment **1** is installed onto the partition **3,** the fastening mechanism **15** allows it to be supportively mounted thereon in a fashion similar to snap fitting. More specifically, during installation, the fastening mechanism **15** is forced through the aperture **3a** of the partition **3,** from the first surface **31** to the second surface **32,** for the flanged portion **12** to become in contact with the first surface **31.** As the fastening mechanism **15** emerges from the aperture **3a** at the side of the second surface **32,** the apparatus **1** may now be deemed to be properly installed on the partition **3** as it is now snugly fitted into the aperture **3a.** With this, the first embodiment **1** is installed onto the partition **3** with the fastening mechanism **15** providing a support at the proximal end of the first embodiment **1.** The first embodiment **1** may now not be removed from the partition unless a substantial force is applied for the fastening mechanism **15** to be forced through the aperture **3a** of the partition **3,** from the second surface **32** to the first surface **31.**

Installation of the first embodiment **1** may be as shown in **FIG. 3****.** As shown, the first embodiment **1** inserted into an aperture **3a** of the partition **3** from its distal end, for its flanged portion **12** at its proximal end to be against a first surface **31** of the partition **3,** and its fastening mechanism **15** supporting it to be in place by being against a second surface **3** of the partition **3.** Preferably, the orientation marker **14** is made to be at a topmost level along the flanged portion **12.**

Likewise, for the uninstallation of the first embodiment **1,** the first embodiment **1** may be forcefully detached from the partition **3** by pulling its flanged portion **211,** or pushing its distal end, for the protrusions **15** to emerge at the first surface **31** of the partition **3,** thereby freeing the first embodiment **1** from the partition **3.**

Regarding the first embodiment **1,** the flanged portion **12** also contributes to the supportive mounting of the first embodiment **1** on the partition **3** much like the fastening mechanism **15.** Since the distal end of the first embodiment **1** is inclined downwards with respect to the proximal end, hence, the weight of its body **11** may cause its flanged portion **12** to be in contact with the partition **3** without human intervention. With this, the first embodiment **1** is installed onto the partition **3** with the flanged portion **12** providing a support for the proximal end of the first embodiment 1 as well. The weight of the body **11** may further include the weight of the fluids and the plant **4** retained therein.

Regarding the first embodiment **1,** the first fluid-channelling portion **131** and the second fluid-channelling portion **132** are involved in managing fluid in the first embodiment **1.** More specifically, fluid received on any part of the lateral surface of the first fluid-channelling portion **131** may be made to flow towards its bottom and away from the first embodiment **1** by the influence of gravity, whereas fluid received at the second fluid-channelling portion **132** may be made to flow towards the fluid collecting portion **133.** Moreover, in the case where the second fluid-channelling portion **132** becomes brimmed with fluid (i.e. fluid gathers thereupon faster than it can channel), the excess fluid may spill over to the lateral surface of the first fluid-channelling portion **131** to flow therealong towards its bottom and away from the first embodiment **1** by the influence of gravity.

Regarding the first embodiment **1,** the fluid-collecting portion **133** and the fluid-draining portion **134** are also involved in managing fluid in the first embodiment **1.** More specifically, the fluid-collecting portion **133** is to collect fluid that the first embodiment **1** receives from the external environment sources and/or itself for the fluid to be within the body **11** of the first embodiment **1** as shown in **FIG. 2****,** and/or received by a root system of the retained plant **4.** Whereas the fluid-draining portion **134** is to remove excess fluid from the body **11** of the first embodiment **1.** Since the fluid-draining portion **134** is configured so that it may be at a substantial distance from the inclined distal end of the body **11,** an amount of fluid may be retained in the body **11.** However, once the level of this fluid reaches the fluid-draining portion **134,** the excess fluid is removed from the body **11** of the first embodiment **1** to maintain the level of fluid within body **11.**

Regarding the first embodiment **1,** the fluid-draining portion **134** is further involved in providing aeration of the roots of the plant **4,** which is shown in **FIG. 2****.** More specifically, the outline of the fluid-draining portion **134** may guide root growth of the plant **4** during its various growth stages, for a portion of the roots of the plant **4** to grow out from the body **11** for its aeration, and for a portion of the roots of the plant **4** to be retained within the body **11** for its nourishment by being immersed in the retained fluid for receiving fluid and nutrients therefrom. It is still noted that the portion of the roots of the plant **4** that grew out from the body **11** may still receive fluid from the fluid-collecting portion **131** and/or from the excess fluid that is removed from the body **11** via the fluid-draining portion **134.**

**FIGS 5** to **7c** illustrate the apparatus of the present invention in its second embodiment **2,** whereby it is in the embodiment of assemblable pieces that define a fixture-adaptor pair, which include a first piece **21** and a second piece **22.** From hereon, the apparatus in its second embodiment **2** is likewise referred to as "second embodiment".

**FIG. 5** illustrates an example installation of the second embodiment **2** onto the partition **3** via an aperture **3a** of the partition **3.**

**FIGS 6a** to **6d** illustrate one or more views of the first piece **21** of the second embodiment **2,** with **FIG. 6a** illustrating its front view, **FIG. 6b** illustrating its rear view, **FIG. 6c** illustrating its top view, and **FIG. 6d** illustrating its side view.

**FIG. 7a** to **7c** illustrate one or more views of the second piece **22** of the second embodiment **2,** with **FIG. 7a** illustrating its rear view, **FIG. 7b** illustrating its top view, and **FIG. 7c** illustrating its side view.

With reference to **FIGS 5a** to **5d,** the first piece **21** of the second embodiment **2** is an overall annular structure that comprises a first flanged portion **211,** fluid-handling portions that include a first fluid-channelling portion **2121** and a second fluid-channelling portion **2122,** a first connector **213,** an orientation marker **214,** and a fastening mechanism **215.**

Regarding the first piece **21** of the second embodiment **2,** the first fluid-channelling portion **2121** is a substantively annular structure that is non-concentric. In other words, the inner circular perimeter of the said annular structure at its front side and the inner circular perimeter of the said annular structure at its rear side do not share an imaginary centre of the same. Preferably, the inner circular perimeter of the said annular structure at its rear side has a downward shift or offset with respect to the inner circular perimeter of the said annular structure at its front side.

Regarding the first piece **21** of the second embodiment **2,** along the lateral surface of its first fluid-channelling portion **2121** lies the second fluid-channelling portion **2122,** which is a concave segment that tapers towards the rear side of the first piece **21.**

Regarding the first piece **21** of the second embodiment **2,** the first flanged portion **211** is yet another annular structure that extends perpendicularly and outwardly from the circumference of the first fluid-channelling portion **2121.** Preferably, the first flanged portion **211** has an outer diameter that is much larger than the first fluid-channelling portion **2121,** but having an inner diameter that is substantially the same as the first fluid-channelling portion **2121** and a lateral surface that is thinner compared to the first fluid-channelling portion **2121.**

Regarding the first piece **21** of the second embodiment **2,** the first connector **213** is to mate with a mateable connector that may be part of another assemblable piece. Preferably, the first connector **213** is an indented segment on the rear side of the first piece **21,** wherein the indented segment includes either one or both portions of the first fluid-channelling portion **2121** and portions of the first flanged portion **211.**

Regarding the first piece **21** of the second embodiment **2,** along the flanged portion **211** there is disposed the orientation marker **214** that serves as an indication of the positioning the first piece **21** as it is installed onto the partition **3.** Furthermore, the orientation marker **214** is preferably adjacent to the second fluid-channelling portion **2122** of the first piece **21.** The orientation marker **214** is to indicate that the first piece **21** is inserted into the aperture **3a** at a correct orientation, wherein its second fluid-channelling portion **2122** is facing an upward direction. During installation of the first piece **21** on the partition **3,** it is most preferable that the orientation marker **214** is substantively made to be at a topmost level along the flanged portion **211** as the flanged portion **211** rests on the partition **3.**

Regarding the first piece **21** of the second embodiment **2,** along the first fluid-channelling portion **2121** there is disposed the fastening mechanism **215,** which is preferably in the form of a set of protrusions that are about the lateral surface of the first fluid-channelling portion **2121.** In particular, there are at least two protrusions that are substantially collinear with respect to each other. As the first piece **21** is installed onto the partition **3,** the fastening mechanism **215** allows it to be supportively mounted thereon in a fashion similar to snap fitting. More specifically, during installation, the fastening mechanism **215** is forced through the aperture **3a** of the partition **3,** from the first surface **31** to the second surface **32,** for the flanged portion **212** to become in contact with the first surface **31.** As the fastening mechanism **15** emerges from the aperture **3a** at the side of the second surface **32,** the first piece **21** may now be deemed to be properly installed on the partition **3** as it is now snugly fitted into the aperture **3a.** With this, an assembled second embodiment **2** may be installed onto the partition **3** with the fastening mechanism **215** providing a support at a proximal end of the second embodiment **2.** The first piece **21** may now not be removed from the partition unless a substantial force is applied for the fastening mechanism **215** to be forced through the aperture **3a** of the partition **3,** from the second surface **32** to the first surface **31.**

With reference to **FIGS 7a** to **7c****,** the second piece **22** of the second embodiment **2** has a body **221** is an overall barrel-like structure that comprises a second flanged portion **2211,** fluid-handling portions that include a fluid collecting portion **2212** and a fluid-draining portion **2213,** and a second connector **2214.**

Regarding the second piece **22** of the second embodiment **2,** its body **221** is further elongate in such a way that its proximal end and its distal end are inclined with respect to each other. More specifically, the distal end is inclined downwards with respect to the proximal end at an angle. This angle may be between 50° and 80°, but is most preferably 65°. Preferably, the proximal end is open-ended for shoots of a plant **4** to emerge therefrom during its growth, while the distal end is closed-ended for retaining the plant therewithin.

Regarding the second piece **22** of the second embodiment **2,** the second flanged portion **2211** is an annular structure that extends perpendicularly and outwardly from the circumference of the body **221,** having an outer diameter that is much larger than the body **221,** but having an inner diameter that is substantially the same as the body **221** and having a lateral surface that is thin much like the first flanged portion **211** of the first piece **21** of the apparatus **2.**

Regarding the second piece **22** of the second embodiment **2,** its body **221** is formed with the fluid-collecting portion **2212** and the fluid-draining portion **2213.** In particular, the fluid-collecting portion **2212** and the fluid-draining portion **2213** are positioned to oppose each other along the body **221.** The relative size of the fluid-collecting portion **2212** is preferably larger than the fluid-draining portion **2213.** Moreover, the fluid-collecting portion **2212** may be a cutout that extends an area along the body **211** that is adjacent to the second flanged portion **2212** to the proximal end of the body **221** to the distal end of the body **221.** The fluid-draining portion **2213** may be a cutout that is at a substantial distance away from the distal end of the body **221.** For the fluid collecting portion **2212,** its outline is substantially rectangular-shaped with rounded edges at the distal end of the body **221.** For the fluid-draining portion **2213,** its outline is substantially tapered with it having a diminishing opening towards the distal end of the body **221,** more specifically, it is teardrop-shaped with a rounded edge in the direction of the proximal end and a pointed edge in the direction of the distal end.

Regarding the second piece **22** of the second embodiment **2,** the second connector **2214** is to mate with a mateable connector that may be part of another assemblable piece such as the first piece **21.** Preferably, the second connector **2214** is a protruded segment that protrudes from the rear side of the second flanged portion **2211** and body **221** as a single segment.

Installation of the second embodiment **2** may be as shown in **FIG. 5****.** As shown, the first piece **21** and the second piece **22** are assemblable to form an assembled second embodiment **2.** In a first assembly example, the first piece **21** is inserted into an aperture **3a** of the partition **3,** preferably with its first flanged portion **211** being against a first surface **31** of the partition **3,** and its fastening mechanism **215** supporting it to be in place by being against a second surface **3** of the partition **3.** Preferably, the orientation marker **214** of the first piece **21** is made to point at a topmost level along the first flanged portion **211.** Continuing from the first assembly example, the second piece **22** is then inserted through the first piece **21** for contact between their flanged portions **211, 2211,** and for the first connector **213** and the second connector **2214** to mate. This concludes the description of the first assembly example.

Likewise, for the uninstallation of the assembled apparatus **2,** the second piece **22** may be made to detach from the first piece **21** by overcoming the mated connection between the first connector **213** and the second connector **2214.** Then, the first piece **21** may be forcefully detached from the partition **3** by pulling its first flanged portion **211** for the protrusions **215** to emerge at the first surface **31** of the partition **3,** thereby freeing the first piece **21** from the partition **3.**

Hence, the first piece **21** may be regarded as an adaptor, and the second piece **22** may be regarded as a fixture. They complement each other to form the fixture-adaptor pair since the first piece **21** makes an aperture **3a** of a partition **3** adapt to the mounting of the second piece **22** during assembly and installation of the second embodiment **2.**

Besides the first assembly example, the installation and uninstallation of the second embodiment **2** can be of any feasible order.

The assembled second embodiment **2** may be much like the first embodiment as shown in **FIGS 3** to **4d****.** In the assembled second embodiment **2,** there is defined a proximal end and a distal end. The proximal end of the assembled second embodiment **2** may include the flanged portions **211, 2211,** the first fluid-channelling portion **2121,** and the second fluid-channelling portion **2122.** The distal end of the assembled second embodiment **2** may be the distal end of the body **221.**

The distal end of the assembled second embodiment **2** is at a downwardly inclined altitude with respect to the proximal end of the assembled second embodiment **2** at the aforementioned angle, since first piece **21,** being a non-concentric annular structure, is shaped so as to allow the second piece **22** to pass through it complementary manner for mating of the connectors **213, 2214.** This is so that the body **221** of the second piece **21** is held at a downwardly inclined altitude in a predefined manner. Per the structure of the second piece **21,** the proximal end of the assembled second embodiment **2** is open-ended for shoots of a plant **4** to emerge therefrom during its growth, while the distal end of the assembled second embodiment **2** is closed-ended for retaining the plant therewithin. Moreover, in the assembled second embodiment **2,** the concave segment of the first fluid-channelling portion **2121** of the first piece **21** now tapers towards the fluid-collecting portion **2212** of the second piece **22.**

Regarding the assembled second embodiment **2,** the flanged portions **211, 2211** also contribute to the supportive mounting of the second embodiment **2** on the partition **3** much like the fastening mechanism **215.** Since the distal end of the assembled second embodiment **2** is inclined downwards with respect to the proximal end, hence, the weight of the body **221** may cause the second flanged portion **2211** to be in contact with the first flanged portion **211** of the first piece **21,** and may further cause the first flanged portion **211** to be in contact with the partition **3** without human intervention. With this, the assembled second embodiment **2** is installed onto the partition **3** with the flanged portions **211, 2211** providing a support for the proximal end of the assembled second embodiment **2** as well. The weight of the body **2211** may further include the weight of the fluids and the plant **4** retained therein.

Regarding the assembled second embodiment **2,** the first fluid-channelling portion **2121** and the second fluid-channelling portion **2122** are involved in managing fluid on the assembled second embodiment **2.** More specifically, fluid received on any part of the lateral surface of the first fluid-channelling portion **2121** may be made to flow towards its bottom and away from the assembled second embodiment **2** by the influence of gravity, whereas fluid received at the second fluid-channelling portion **2122** may be made to flow towards the fluid-collecting portion **2212.** Moreover, in the case where the second fluid-channelling portion **2122** becomes brimmed with fluid (i.e. fluid gathers thereupon faster than it can channel), the excess fluid may spill over to the lateral surface of the first fluid-channelling portion **2121** to flow therealong towards its bottom and away from the first embodiment **1** by the influence of gravity.

Regarding the assembled second embodiment **2,** the fluid-collecting portion **2212** and the fluid-draining portion **2213** are also involved in managing fluid on the assembled second embodiment **2.** More specifically, the fluid-collecting portion **2212** is to collect fluid that the assembled second embodiment **2** receives from the external environment sources and/or itself for the fluid to be within the body **221** of the assembled second embodiment **2** as shown in **FIG. 2****,** and/or received by a root system of the retained plant **4.** Whereas the fluid-draining portion **2213** is to remove excess fluid from the body **221** of the assembled second embodiment **2.** Since the fluid-draining portion **2213** is configured so that it may be at a substantial distance from the inclined distal end of the body **221,** an amount of fluid may be retained in the body **221.** However, once the level of this fluid reaches the fluid-draining portion **2213,** the excess fluid is removed from the body **221** of the assembled second embodiment **2** to maintain the level of fluid within body **221.**

Regarding the assembled second embodiment **2,** the fluid-draining portion **2213** is further involved in providing aeration of the roots of the plant **4,** which is shown in **FIG. 2****.** More specifically, the outline of the fluid-draining portion **2213** may guide root growth of the plant **4** during its various growth stages, for a portion of the roots of the plant **4** to grow out from the body **221** for its aeration, and for a portion of the roots of the plant **4** to be retained within the body **221** its nourishment by being immersed in the retained fluid for receiving fluid and nutrients therefrom. It is still noted that the portion of the roots of the plant **4** that grew out from the body **221** may still receive fluid from the fluid-collecting portion **2212** or from the excess fluid that is removed from the body **221** via the fluid-draining portion **2213.**

Regarding the second embodiment **2,** it is to be noted that the first connector **213** of the first piece **21** and the second connector **2214** of the second piece **22** may not be limited to as described. For example, the first connector **213** may be disposed about any location or position about the first piece **21** and the second connector **2214** may be disposed about any location or position about the second piece **22,** as long as they are mateable when the first piece **21** and the second piece **22** are assembled. Moreover, the first connector **213** may alternatively be a protruded segment, while the second connector **2214** may alternatively be a corresponding recessed segment.

Regarding the second embodiment **2,** it is to be noted that it provides a degree of customisability since the second piece **22** may be interchanged with another second piece **22** that has a different overall length while still using the same first piece **22.** This allows for a large variety of system design choices, such as customisation based on the intended plant varieties to be cultivated, customisation of the partition, or the like.

**FIGS 8a** and **8b** are diagrams illustrating alternative configurations of the first fluid-channelling portion for both embodiments of the apparatus. In particular, **FIG. 8a** illustrates the first fluid-channelling portion **131** of the first embodiment **1** in an alternative configuration, and **FIG. 8b** illustrates the first fluid-channelling portion **2121** of the first piece **21** of the second embodiment **2** in an alternative configuration.

As shown in **FIG. 8a****,** at the lower area of the first fluid-channelling portion **131,** or at the area of the first fluid-channelling portion **131** that is directly opposite to the second fluid-channelling portion **132,** its surface is inclined away from the flanged portion **12** at an angle with respect to the flanged portion **12.** More specifically, the said surface in this alternative configuration is to enhance the flow of fluid as the fluid reaches the area of this said surface for the fluid to be directed or diverted away from the apparatus away from the partition **3.** Whilst not shown, this said surface may also be configured to be inclined towards the flanged portion **21** at an angle with respect to the flanged portion **21,** wherein such a surface may enhance the flow of fluid as the fluid reaches the area of this said surface for the fluid to be directed or diverted away from the apparatus towards the partition **3** for fluid to flow therealong.

As shown in **FIG. 8b****,** at the lower area of the first fluid-channelling portion **2121,** or at the area of the first fluid-channelling portion **2121** that is directly opposite to the second fluid-channelling portion **2122,** its surface is inclined away from the first flanged portion **211** at an angle with respect to the first flanged portion **211.** More specifically, the said surface in this alternative configuration is to enhance the flow of fluid as the fluid reaches the area of this said surface for the fluid to be directed or diverted away from the first apparatus **1** away from the partition **3.** Whilst not shown, this said surface may also be configured to be inclined towards the first flanged portion **211** at an angle with respect to the flanged portion **211,** wherein such a surface may enhance the flow of fluid as the fluid reaches the area of this said surface for the fluid to be directed or diverted away from the second apparatus **2** towards the partition **3** for fluid to flow therealong.

**FIGS 9a** to **10b** illustrate alternative configurations for more than one fluid-draining portion for the apparatus of the present invention in its various embodiments **1, 2,** more specifically, the first embodiment **1** and the second piece **22** of the second embodiment **2.** It is to be noted that previous descriptions of the first embodiment **1** and the second piece **22** of the second embodiment **2** may apply to these alternative configurations.

In regards to the first embodiment **1** having more than one fluid-draining portion, **FIG. 9a** illustrates its rear view, **FIG. 9b** illustrates its side view, **FIG. 9d** illustrates its top view, and **FIG. 9e** illustrates its bottom view. In particular, **FIG. 9c** illustrates the first embodiment **1** that has an alternative configuration of the first fluid-channelling portion **131** as shown in **FIG. 8a****,** as well as having the alternative configuration of more than one fluid-draining portion.

In regards to the second piece **22** of the second embodiment **2** having more than one fluid-draining portion, **FIG. 10a** illustrates its rear view, and **FIG. 10b** illustrates its bottom view. Whilst not shown, there may further be a second embodiment **2** that has an alternative configuration of the first fluid-channelling portion **2121** as shown in **FIG. 8b****,** as well as having the alternative configuration of more than one fluid-draining portion.

As shown in **FIGS 9a** to **10b****,** within these embodiments **1, 2,** there is a first set of fluid-draining portions **134a, 2213a** on their body **11, 221,** which are cutouts with longitudinal outlines formed on the body **11, 221** that extend therealong and substantially tapers towards the distal end of the body **11, 221.** Furthermore, within these embodiments **1, 2,** the distal end of the body **11, 221** has a partially-closed end in which a second set of fluid-draining portions **134b, 2213b** is formed thereon.

Referring to **FIGS 9a to 10b****,** the first set of fluid-draining portions **134a, 2213a** may be cutouts having longitudinal outlines of varying longitudinal lengths, and these cutouts may be cover an entire arc of the body **11, 221** or portions thereof. More specifically, a bottommost fluid-draining portion of the first set of fluid-draining portions **134a, 2213a** may be of the shortest longitudinal length, and the other fluid-draining portions of the first set of fluid-draining portions **134a, 2213a** may have successively longer longitudinal lengths from the bottommost fluid-draining portion. Moreover, the bottommost fluid-draining portion of the first set of fluid-draining portions **134a, 2213a** may be at a substantial distance away from the distal end of the body **11, 221.**

Referring to **FIGS 9a** to **10b****,** the second set of fluid-draining portions **134b, 2213b** may be a cutout with a shaped outline(s) formed at the distal end of the body **11, 221.** The shape may be semicircular, but may be any other permissible shapes. More specifically, the distal end of the body **11, 221** has a partially-closed end in such a way that a lower area of the distal end is walled, while an upper area of the distal end is where the second set of fluid-draining portions **134b, 2213b** is formed thereon.

Referring to **FIGS 9a** to **10b****,** with the first set of fluid-draining portions **134a, 2213a** and the second set of fluid-draining portions **134b, 2213b** configured on the body **11, 221** as such, the removal of excess fluid from body **11, 221** and the retainment of an amount of fluid within the body **11, 221** and are maintained. In particular, once the level of the retained fluid reaches any one or both the first set of fluid-draining portions **134a, 2213a** and the second set of fluid-draining portions **134b, 2213b,** the excess fluid is removed from the body **11, 221** of the embodiments **1, 2** to maintain the level of fluid within body **11, 221.** Moreover, similarly, the first set of fluid-draining portions **134a, 2213a** may be involved in providing aeration of the roots of the plant and guiding root growth of the plant.

**FIGS 11** and **12** illustrate a sectional side view of the present invention, whereby the apparatuses **1, 2** are installed onto a partition via apertures of the partition, each having growing medium **5** for plants **4** to grow therein the apparatus **1, 2.** The growing medium **5** may be, by way of example, perlite, coco coir, Rockwool cubes, vermiculite, peat moss, or the like. Further illustrated in **FIG. 11** is an example fluid distribution between the apparatuses **1, 2.** It is to be noted that the apparatuses **1, 2** may be either one of the first embodiment **1** or the second embodiment **2** as described beforehand. In particular, for **FIG. 12****,** it is to be further noted that the first fluid-channelling portions **131 2121** of the apparatuses **1, 2** are of the alternative configuration as shown in **FIGS 8a** and **8b****.**

The example setup as shown in **FIGS 11** and **12** may be may be part of a system for horticulture, which may further include a fluid source, a fluid dispensing means, a fluid recovery means, a light source, or the like. Each apparatus **1, 2** in a system for horticulture may be installed on the partition **3** to be located adjacent and equidistant to one another. Hence, each apparatus **1, 2** may be positioned and arranged to be directly beside, above or below each other. As for the fluid used, it may be, by way of example, water, nutrient solutions, liquid fertilizers, or any kind of fluid suitable for use in hydrating and/or nourishing the plants **4.** Fluid from the fluid source may be dispensed by the fluid dispensing means by means of dripping, spraying, or trickling in an area that includes the second surface of the partition **3,** where the distal end of the apparatus **1, 2** protrudes therefrom.

In an example dispensation of fluid via dripping, fluid may be made to drip from the fluid dispensing means towards one or more topmost apparatuses **1, 2.** The fluid-handling portions of the topmost apparatuses **1, 2** will correspondingly handle the fluid received, and may direct portions of the fluid received towards subsequent apparatuses **1, 2** below them, and so forth. Finally, for one or more bottommost apparatuses **1, 2,** they direct a portion of the received fluid to a fluid recovery means.

In an example dispensation of fluid via spraying, fluid may be sprayed in the form of a mist by the fluid dispensing means towards the second surface **32** of the partition **3** where the distal end of the apparatuses **1, 2** protrudes therefrom. The fluid that condenses or gathers upon the apparatuses **1, 2** may be received by each of their fluid-handling portions, and each apparatus **1, 2** may direct portions of the fluid received towards subsequent apparatuses **1, 2** below it. Finally, for one or more bottommost apparatuses **1, 2,** they direct a portion of the received fluid to a fluid recovery means. In such an example dispensation, the fluid sprayed may also be received by the roots of the plant that that grew out from the apparatus **1, 2.**

In an example dispensation of fluid via flowing, fluid may be made to trickle down or stream down the second surface **32** of the partition **3** where the distal end of the apparatuses **1, 2** protrudes therefrom, by the fluid dispensing means. Fluid that gathers upon the apparatuses **1, 2** may be received by each of their fluid-handling portions, and each apparatus **1, 2** may direct portions of the fluid received towards subsequent apparatuses **1 2** below it. Finally, for one or more bottommost apparatuses **1, 2,** they direct a portion of its received fluid to a fluid recovery means.

The handling of fluid by each apparatus **1, 2** for fluid distribution between them shall now be described:
- Fluid received by the first fluid-channelling portion **131, 2121** of the apparatus **1, 2,** preferably via its lateral surface, may be directed towards a subsequent apparatus **1, 2.** More specifically, the second fluid-channelling portion **132, 2122** of the subsequent apparatus **1, 2.**
- Fluid received by the second fluid-channelling portion **132, 2122** of the apparatus **1,** 2, may be directed towards its fluid-collecting portion **133, 2212.**
- Fluid received by the fluid-collecting portion **133, 2212** of the apparatus **1, 2** may be directed towards a root system of the retained plant **4** and/or be retained within the body **11, 221.**
- Fluid that overflows out from body **11, 221** of the apparatus **1, 2** via its fluid-draining portion **134, 2213** may be directed towards a subsequent apparatus **1, 2.** More specifically, the fluid-collecting portion **133, 2212** of the subsequent apparatus **1, 2.**

In particular, when fluid received by the first fluid-channelling portion **131, 2121** of the apparatus **1, 2** flows along its lateral surface and reaches a lower area or an area that is directly opposite to the second fluid-channelling portion **132, 2122,** the fluid may
- flow in a neutral direction to reach a subsequent apparatus **1, 2** as shown in **FIG. 11****,** in the case where the said area of the first fluid-channelling portion **131, 2121** is configured to be without inclination;
- flow in a direction away from the partition **3** to reach a subsequent apparatus **1, 2,** as shown in **FIG. 12****,** in the case where the said area of the first fluid-channelling portion **131, 2121** is configured to be inclined away from the partition **3;** or
- flow in a direction towards the partition **3** to reach a subsequent apparatus **1, 2** (not shown), in the case where the said area of the first fluid-channelling portion **131, 2121** is configured to be inclined towards the partition **3.**

It should be noted that the illustrations of **FIG. 11** and **FIG. 12** are not intended to be interpreted as limitations to the present invention. The apparatus **1, 2** of **FIG. 11** and **FIG. 12** may be installed onto one partition **3** of the same.

Whilst not shown, it is to be noted that the descriptions of **FIG. 11** and **FIG. 12** are applicable to apparatuses **1, 2** that have more than one fluid-draining portion as shown in **FIGS 9a** to **10b****.**

With this, the details pertaining to an apparatus **1, 2** for horticulture that is to be mounted onto a partition **3** for the cultivation of a plant **4** therewithin, along with a system for horticulture involving it, have been elucidated. Whilst the apparatus **1, 2** had been described to be primarily involved in a vertical farming setting, it is to be noted that it may be readily generalised by a person skilled in the art for usage in any horticulture systems and/or methods known in the art.

It is to be noted that, although the terms first, second, etc. may have been used to describe various elements, components, regions, pieces or sections, these elements, components, regions, pieces or sections should not be limited by these terms. These terms were only used to distinguish one element, component, region, piece or section from another region, piece or section. Thus, a first element, component, region, piece or section as discussed above could be termed a second element, component, region, piece or section without departing from the teachings of the present invention.

The present disclosure includes the appended claims and the foregoing description. Although this invention has been described in its preferred form with a degree of particularity, it is understood that the present disclosure of the preferred form has been made only by way of example and that numerous changes in the details of construction and the combination and arrangements of parts may be resorted to without departing from the scope of the invention.

## Claims

1. An apparatus for horticulture, comprising
an elongate body that retains a plant therewithin,
a flanged portion at a proximal end of the apparatus; and
one or more fluid-handling portions that include
a first fluid-channelling portion at the proximal end of the apparatus in which the flanged portion extends therefrom; and
a second fluid-channelling portion that is formed on the first fluid-channelling portion;
wherein
the body is inclined relative to a plane having the flanged portion with a distal end of the apparatus extending in a downwardly inclined altitude with respect to the flanged portion, with the flanged portion supporting the installation of the apparatus into an aperture of a vertical structure having levelled surfaces for fluid received by the apparatus to be handled by one or a combination of the fluid-handling portions where
the first fluid-channelling portion directs received fluid away from the apparatus; and
the second fluid-channelling portion directs fluid towards the body.

2. The apparatus according to claim 1, wherein the fluid-handling portions further include
a fluid-collecting portion formed on the body; and
at least one fluid-draining portion formed on the body;
wherein
the fluid-collecting portion allows receipt of fluid from the environment and/or itself into the body; and
the fluid-draining portion drains excess fluid within the body away from the apparatus.

3. The apparatus according to claim 2, wherein the fluid-draining portion is at a distance away from the distal end of the apparatus for retaining a portion of received fluid within the body for immersing roots of the plant therein.

4. The apparatus according to claim 2 or 3, wherein the fluid-draining portion is formed with an outline that is tapered towards the distal end of the apparatus for guiding root growth of a plant to be external of the body for its aeration.

5. The apparatus according to any one of the preceding claims, further comprising a fastening mechanism formed along a lateral surface of the first fluid-channelling portion as a set of protrusions for providing a support at the proximal end of the apparatus as the apparatus is installed on the vertical structure.

6. The apparatus according to any one of the preceding claims, further comprising an orientation marker formed on the flanged portion for serving as an indication of a proper orientation of the apparatus whereby it is at a topmost level along the flanged portion.

7. The apparatus according to any one of the preceding claims, wherein
the first fluid-channelling portion and the second fluid-channelling portion are part of a first piece; and
the fluid-collecting portion and the fluid-draining portion are part of a second piece;
wherein the first piece and the second piece are capable of being assembled to form the apparatus.

8. The apparatus according to claim 7, wherein the first piece and the second piece each include a connector that is mateable with each other for the first piece and the second piece to be detachably connected for their assembly.

9. The apparatus according to any one of the preceding claims, wherein the body is inclined relative to a plane having the flanged portion with a distal end of the apparatus extending in a downwardly inclined altitude with respect to the flanged portion at an angle that is between 50° and 80°.

10. A system for horticulture, comprising
a vertical structure having levelled surfaces, formed with a plurality of apertures;
a fluid dispensing means for dispensing fluid; and
a plurality of apparatuses for horticulture that each includes
an elongate body that retains a plant therewithin,
a flanged portion at a proximal end of the apparatus; and
one or more fluid-handling portions that include;
a first fluid-channelling portion at the proximal end of the apparatus in which the flanged portion extends therefrom; and
a second fluid-channelling portion that is formed on the first fluid-channelling portion;
wherein the body of each apparatus is inclined relative to a plane having the flanged portion with a distal end of the apparatus extending in a downwardly inclined altitude with respect to the flanged portion, with the flanged portion supporting the installation of the apparatus into one aperture of the vertical structure for fluid dispensed by the fluid-dispensing means to be received by the apparatus for it handled by one or a combination of the fluid-handling portions where
the first fluid-channelling portion directs received fluid away from the apparatus; and
the second fluid-channelling portion directs fluid towards the body.

11. The system according to claim 10, wherein the fluid-handling portions of the apparatus further include
a fluid-collecting portion formed on the body; and
at least one fluid-draining portion formed on the body;
wherein
the fluid-collecting portion allows receipt of fluid from the environment and/or itself into the body; and
the fluid-draining portion drains excess fluid within the body away from the apparatus.

12. The system according to claim 11, wherein the fluid-draining portion of the apparatus is at a distance away from the distal end of the apparatus for retaining a portion of received fluid within the body for immersing roots of the plant therein.

13. The system according to claim 11 or 12, wherein the fluid-draining portion of the apparatus is formed with an outline that is tapered towards the distal end of the apparatus for guiding root growth of a plant to be external of the body for its aeration.

14. The system according to any one of claims 11 to 13, wherein the apparatus further comprises a fastening mechanism formed along a lateral surface of the first fluid-channelling portion as a set of protrusions for providing a support at the proximal end of the apparatus as the apparatus is installed on the vertical structure.

15. The system according to any one of claims 11 to 14, wherein the apparatus further comprises an orientation marker formed on the flanged portion for serving as an indication of a proper orientation of the apparatus whereby it is at a topmost level along the flanged portion.

16. The system according to any one of claims 11 to 15, wherein the apparatus is in the form of assemblable pieces where
the first fluid-channelling portion and the second fluid-channelling portion are part of a first piece; and
the fluid-collecting portion and the fluid-draining portion are part of a second piece; wherein the first piece and the second piece are capable of being assembled to form the apparatus.

17. The system according to claim 16, wherein the first piece and the second piece of the apparatus each include a connector that is mateable with each other for the first piece and the second piece to be detachably connected for their assembly.

18. A kit of parts assembly for horticulture, comprising
a first piece and a second piece, with
an elongate body that retains a plant therewithin being part of the second piece;
a flanged portion being part of either one or both the first piece and the second piece; and
one or more fluid-handling portions being part of either one or both the first piece and the second piece that include;
a first fluid-channelling portion that is part of the first piece; and
a second fluid-channelling portion that is part of the first piece, which is formed on the first fluid-channelling portion;
wherein
the first piece and the second piece are detachably connectable with each other; and
assembly of the pieces provides an assembled piece where
the first fluid-channelling portion is at a proximal end of the assembled piece; and
the body is inclined relative to a plane having the flanged portion with a distal end of the assembled piece extending in a downwardly inclined altitude with respect to the flanged portion, with the flanged portion supporting the installation of the assembled piece into an aperture of a vertical structure having levelled surfaces for fluid received by the assembled piece to be handled by one or a combination of the fluid-handling portions where
the first fluid-channelling portion that is part of the first piece directs received fluid away from the assembled piece; and
the second fluid-channelling portion directs fluid towards the body of the assembled piece.
